# EUROPEAN PATENT APPLICATION

(11) **EP 4 155 040 A1**
(43) Date of publication of application: **29.03.2023**
(21) Application number: 21875026.3
(22) Date of filing: 30.08.2021
(51) Int. Cl.: B28B 3/02, E04F 13/14

(54) **INORGANIC PLATE MANUFACTURING METHOD AND INORGANIC PLATE**

(30) Priority: 30.09.2020 JP 2020166160
(71) Applicant: Nichiha Corporation, Nagoya-shi, Aichi 455-8550 (JP)
(72) Inventor: IKEDA Satoshi, Nagoya-si, Aichi 455-8550 (JP); YOSHIDA Kazuhisa, Nagoya-si, Aichi 455-8550 (JP); MOROHOSHI Yuto, Nagoya-si, Aichi 455-8550 (JP)
(74) Representative: Isarpatent
(86) International application number: PCT/JP2021/031759
(87) International publication number: WO 2022/070723

(57) **Abstract**

[Object] An object is to provide an inorganic board and a method for manufacturing the same that are suited to achieving high waterproofness.

[Solution] A manufacturing method of the present invention includes first to sixth steps. The first step involves depositing a raw material on a receiving plate B1 to form a first layer L1. The second step involves pressing a first portion Ma and a second portion Mb of a raw material mat M including the first layer L1 toward the receiving plate B1 to compress the first portion Ma and the second portion Mb. The first portion Ma and the second portion Mb are one end portion and the other end portion, respectively, of the raw material mat M in a first direction D1. The third step involves depositing a raw material on the first layer L1 to form a second layer L2. The fourth step involves planarizing an exposed surface of the second layer L2. The fifth step involves curing the raw material mat M pressed between the receiving plate B1 and a pressing plate B2 to form a cured plate M' from raw material mat M. The sixth step involves processing the first portion Ma and the second portion Mb into a first back-side joint part P1 and a first front-side joint part P2, respectively. An inorganic board X1 according to the present invention includes the first back-side joint part P1 and the first front-side joint part P2 that are high-density parts.

## Description

### Technical Field

The present invention relates to a method for manufacturing an inorganic board that can be used as a building board, and also relates to the inorganic board.

### Background Art

Inorganic boards, such as fiber reinforced cement siding boards and ceramic boards, may be used as building boards to form exterior walls and interior walls of buildings. An inorganic board is formed of a raw material primarily composed of a hydraulic cement-based inorganic material, for example, by a press process. Edges of the inorganic board are each processed into a shape that is suited for joining to another inorganic board. For construction of a wall using the inorganic board, a plurality of inorganic boards are joined together in up-down and right-left directions. A technique relating to such an inorganic board is described, for example, in Patent Literature 1.

### Citation List

### Patent Literature

PTL 1: Japanese Unexamined Patent Application Publication No. 5-000411

### Summary of Invention

### Technical Problem

Wall materials used to form exterior walls, such as inorganic boards, are exposed, for example, to ultraviolet light, carbon dioxide, and water from rainfall in an outdoor environment. Effects of water on wall materials, such as inorganic boards, have become increasingly well understood in recent years. For example, water may cause color fading and peeling of coating on the wall material surface. Water may cause cracks in the internal texture of the wall material, or may accelerate the process of neutralization. Depending on the difference between warm and cold temperatures in the environment, the effect of repeated freezing and thawing of water (i.e., freezing and thawing effect) may accelerate local destruction of the wall material or peeling of the coating and may result in degradation of the wall material.

The shape of each edge of the inorganic board to be joined is formed by cutting work. As a result, the basis material of the internal texture of the inorganic board is exposed at the surface processed by the cutting work. This leads to easy entry of water through the edges into the inorganic board. Therefore, the inorganic board has conventionally been susceptible to water. For durability, it is not desirable that the inorganic board be susceptible to water.

The present invention has been made under the circumstances described above. An object of the present invention is to provide an inorganic board manufacturing method suited to achieving high waterproofness and an inorganic board suited to achieving high waterproofness. Solution to Problem

A first aspect of the present invention provides an inorganic board manufacturing method. The inorganic board manufacturing method includes a first depositing step, a pressing step, a second depositing step, a planarizing step, and a processing step.

The first depositing step involves depositing a first raw material containing a first inorganic material with hydraulic properties and a first reinforcing material on a receiving plate to form a first layer. The pressing step involves pressing a first portion and a second portion of a raw material mat including the first layer toward the receiving plate from a side opposite the receiving plate to compress the first portion and the second portion. The first portion and the second portion are one end portion and the other end portion, respectively, of the raw material mat in a first direction.

The second depositing step involves depositing a second raw material containing a second inorganic material with hydraulic properties and a second reinforcing material on the first layer to form a second layer. The planarizing step involves planarizing an exposed surface of the second layer. The exposed surface is opposite the receiving plate.

The curing step involves placing a pressing plate on the raw material mat including the first layer and the second layer, and curing the raw material mat pressed between the receiving plate and the pressing plate to form a cured plate from the raw material mat. The processing step involves processing the first portion and the second portion into a first back-side joint part and a first front-side joint part, respectively.

In the inorganic board manufacturing method of the present invention, the first depositing step, the pressing step, the second depositing step, and the planarizing step can produce the raw material mat where the amount of deposited raw material per unit thickness is locally larger at the first portion and the second portion. The curing step which involves pressing the raw material mat in the thickness direction can produce the cured plate that is locally densified at both end portions (i.e., the first portion and the second portion) in the first direction by locally densely compressing the raw material (containing the inorganic material and the reinforcing material) at both the end portions. Then, the processing step which involves forming the first back-side joint part and the first front-side joint part at both the end portions with high density can produce the inorganic board having the first back-side joint part and the first front-side joint part that are local high-density parts.

The inorganic board manufacturing method according to the present invention can produce, as described above, the inorganic board having the first back-side joint part and the first front-side joint part that are local high-density parts. This inorganic board is not excessively heavy and is, at the same time, suited to preventing entry of water through the inorganic board edges processed for forming the first back-side joint part and the first front-side joint part. That is, the manufacturing method of the present invention is suited to achieving high waterproofness in the inorganic board to be manufactured.

Preferably, the pressing step presses a third portion and a fourth portion of the raw material mat toward the receiving plate from the side opposite the receiving plate to compress the third portion and the fourth portion. The third portion and the fourth portion are one end portion and the other end portion, respectively, of the raw material mat in a second direction crossing the first direction. In this case, the processing step processes the third portion and the fourth portion into a second back-side joint part and a second front-side joint part, respectively.

In this configuration, the raw material mat where the amount of deposited raw material per unit thickness is locally larger at the third portion and the fourth portion, as well as at the first and second portions, can be produced as a raw material mat to be subjected to the curing step. Then, the processing step can produce the inorganic board having the first back-side joint part, the first front-side joint part, the second back-side joint part, and the second front-side joint part that are local high-density parts. This inorganic board is not excessively heavy and is, at the same time, suited to preventing entry of water through the first back-side joint part and the first front-side joint part and entry of water through the second back-side joint part and the second front-side joint part.

Preferably, the pressing step presses a fifth portion of the raw material mat toward the receiving plate from the side opposite the receiving plate to compress the fifth portion. The fifth portion is part of a region lying between the first portion and the second portion of the raw material mat in the first direction.

The pressing step described above can produce, as a raw material mat to be subjected to the curing step, a raw material mat where the amount of deposited raw material per unit thickness is locally larger also at the fifth portion. The inorganic board locally denser in the first back-side joint part, the first front-side joint part, and the fifth portion can thus be produced. The fifth portion is suited to functioning as a reinforcing part of the inorganic board. Specifically, the fifth portion is suited to reducing warpage of the inorganic board during construction or transport of the inorganic board and therefore suited to reducing the occurrence of microcracks inside the inorganic board caused by the warpage. Reducing the occurrence of microcracks is desirable in achieving high waterproofness of the inorganic board.

Preferably, the pressing step presses a sixth portion of the raw material mat toward the receiving plate from the side opposite the receiving plate to compress the sixth portion. The sixth portion is part of a region lying between the third portion and the fourth portion of the raw material mat in the second direction.

The pressing step described above can produce, as a raw material mat to be subjected to the curing step, a raw material mat where the amount of deposited raw material per unit thickness is locally larger also at the sixth portion. The inorganic board locally denser in the sixth portion can thus be produced. The sixth portion is suited to functioning as a reinforcing part of the inorganic board. The details are the same as those described for the fifth portion.

Preferably, the inorganic board manufacturing method further includes at least one third depositing step of depositing a third raw material containing a third inorganic material with hydraulic properties and a third reinforcing material to form a third layer. In this case, the third depositing step forms the third layer on the receiving plate before the first depositing step, and the first depositing step forms the first layer on the third layer. Alternatively, the third depositing step forms the third layer on the second layer between the planarizing step and the curing step. Alternatively, the third depositing step forms the third layer on the receiving plate before the first depositing step, the first depositing step forms the first layer on the third layer, and the third depositing step forms the third layer on the second layer between the planarizing step and the curing step.

This configuration is suited to forming the third layer as a surface layer from the third raw material, which is more suited to forming a surface layer than the first raw material and the second raw material. For example, the third raw material, which contains the third reinforcing material smaller than the first reinforcing material and the second reinforcing material, is more suited to forming a dense cured layer as a surface layer than the first raw material and the second raw material.

Preferably, the receiving plate and/or the pressing plate is a template having an indented surface adjacent to the raw material mat.

This configuration is suited to producing an inorganic board having a design surface with indentations on one or both sides. In this configuration, when a template having raised portions in areas corresponding to predetermined areas for forming the back-side joint parts (the first back-side joint part and the second back-side joint part) in the raw material mat is used as the template described above, it is possible to reduce processing work for making the back-side joint parts in the processing step.

A second aspect of the present invention provides an inorganic board. The inorganic board has a front side and a back side opposite the front side, and has a thickness between the front side and the back side. The inorganic board includes a first back-side joint part at one end thereof and a first front-side joint part at the other end thereof in a first direction crossing the thickness direction.

The first back-side joint part has a first base portion at least as thick as a first inner portion adjacent to the first back-side joint part in the first direction and a first extending portion thinner than the first base portion and extending outward from the first base portion in the first direction. The first base portion and the first extending portion are denser than the first inner portion.

The first front-side joint part has a second base portion at least as thick as a second inner portion adjacent to the first front-side joint part in the first direction and a second extending portion thinner than the second base portion and extending outward from the second base portion in the first direction. The second extending portion is disposed on a side of the first extending portion adjacent to the front side in the thickness direction. The second base portion and the second extending portion are denser than the second inner portion.

The inorganic board described above is not excessively heavy and is, at the same time, suited to preventing entry of water in the first back-side joint part and the first front-side joint part, which are local high-density parts. This inorganic board can be produced by the inorganic board manufacturing method according to the first aspect of the present invention.

In a preferred embodiment, the first back-side joint part and the first front-side joint part have a multilayer structure including a first cured layer and a second cured layer in the thickness direction. This configuration is suited to varying the physical properties and characteristics in the first back-side joint part and the first front-side joint part in the thickness direction.

Preferably, the inorganic board further includes a first reinforcing part which is part of a region lying between the first back-side joint part and the first front-side joint part in the first direction. The first reinforcing part has a multilayer structure including the first cured layer and the second cured layer. The first reinforcing part is at least as thick as portions adjacent to the first reinforcing part in the first direction and is denser than the portions adjacent thereto.

The first reinforcing part denser than the portions adjacent thereto is suited to serving the function of reinforcing the inorganic board. Specifically, the first reinforcing part is suited to reducing warpage of the inorganic board during construction or transport of the inorganic board and therefore suited to reducing the occurrence of microcracks inside the inorganic board caused by the warpage. Reducing the occurrence of microcracks is desirable in achieving high waterproofness of the inorganic board.

Preferably, the inorganic board includes a second back-side joint part at one end thereof and a second front-side joint part at the other end thereof in a second direction crossing the thickness direction and the first direction. The second back-side joint part has a third base portion at least as thick as a third inner portion adjacent to the second back-side joint part in the second direction and a third extending portion thinner than the third base portion and extending outward from the third base portion in the second direction. The third base portion and the third extending portion are denser than the third inner portion. The second front-side joint part has a fourth base portion at least as thick as a fourth inner portion adjacent to the second front-side joint part in the second direction and a fourth extending portion thinner than the fourth base portion and extending outward from the fourth base portion in the second direction. The second extending portion is disposed on a side of the first extending portion adjacent to the front side in the thickness direction. The fourth base portion and the fourth extending portion are denser than the fourth inner portion.

The inorganic board described above is not excessively heavy and is, at the same time, suited to preventing entry of water in the first back-side joint part, the first front-side joint part, the second back-side joint part, and the second front-side joint part, which are local high-density parts.

In a preferred embodiment, the second back-side joint part and the second front-side joint part have a multilayer structure including a first cured layer and a second cured layer in the thickness direction. This configuration is suited to varying the physical properties and characteristics in the first back-side joint part and the first front-side joint part in the thickness direction.

Preferably, the inorganic board further includes a second reinforcing part which is part of a region lying between the second back-side joint part and the second front-side joint part in the second direction. The second reinforcing part has a multilayer structure including the first cured layer and the second cured layer. The second reinforcing part is at least as thick as portions adjacent to the second reinforcing part in the second direction and is denser than the portions adjacent thereto.

The second reinforcing part denser than the portions adjacent thereto is suited to serving the function of reinforcing the inorganic board. The details are the same as those described for the first reinforcing part.

Preferably, the inorganic board has a multilayer structure including a first cured layer, a second cured layer, and a third cured layer in order of description, a multilayer structure including a third cured layer, a first cured layer, and a second cured layer in order of description, or a multilayer structure including a third cured layer, a first cured layer, a second cured layer, and another third cured layer in order of description.

This configuration is suited to providing, as a third cured layer, a cured layer having properties different from those of the first cured layer and the second cured layer. Examples of the cured layer having properties different from those of the first cured layer and the second cured layer include a cured layer that is denser than the first cured layer and the second cured layer. Such a cured layer serves as a surface layer of the present inorganic board and helps the present inorganic board achieve high waterproofness. Brief Description of Drawings

[Fig. 1] Fig. 1 illustrates some steps of an inorganic board manufacturing method according to a first embodiment of the present invention.
[Fig. 2] Fig. 2 illustrates steps following those illustrated in Fig. 1.
[Fig. 3] Fig. 3 is a schematic plan view of an inorganic board manufactured by the manufacturing method according to the first embodiment.
[Fig. 4] Fig. 4 is a partially omitted cross-sectional view taken along line IV-IV in Fig. 3.
[Fig. 5] Fig. 5 is a partially omitted cross-sectional view taken along line V-V in Fig. 3.
[Fig. 6] Fig. 6 illustrates an example of a roller that can be used in a pressing step according to the first embodiment.
[Fig. 7] Fig. 7(a) is a partially omitted cross-sectional view of an inorganic board manufactured by a modified inorganic board manufacturing method, and Fig. 7(b) is another partially omitted cross-sectional view of the inorganic board.
[Fig. 8] Fig. 8 illustrates some steps of an inorganic board manufacturing method according to a second embodiment of the present invention.
[Fig. 9] Fig. 9 illustrates steps following those illustrated in Fig. 8.
[Fig. 10] Fig. 10 is a schematic plan view of an inorganic board manufactured by the manufacturing method according to the second embodiment.
[Fig. 11] Fig. 11 is a partially omitted cross-sectional view taken along line XI-XI in Fig. 10.
[Fig. 12] Fig. 12 is a partially omitted cross-sectional view taken along line XII-XII in Fig. 10.
[Fig. 13] Fig. 13 illustrates an example of a roller that can be used in a pressing step according to the second embodiment.
[Fig. 14] Fig. 14 illustrates some steps of an inorganic board manufacturing method according to a third embodiment of the present invention.
[Fig. 15] Fig. 15 illustrates steps following those illustrated in Fig. 14.
[Fig. 16] Fig. 16 illustrates steps following those illustrated in Fig. 15.
[Fig. 17] Fig. 17 is a schematic plan view of an inorganic board manufactured by the manufacturing method according to the third embodiment.
[Fig. 18] Fig. 18 is a partially omitted cross-sectional view taken along line XVIII-XVIII in Fig. 17.
[Fig. 19] Fig. 19 is a partially omitted cross-sectional view taken along line XIX-XIX in Fig. 17. Description of Embodiments

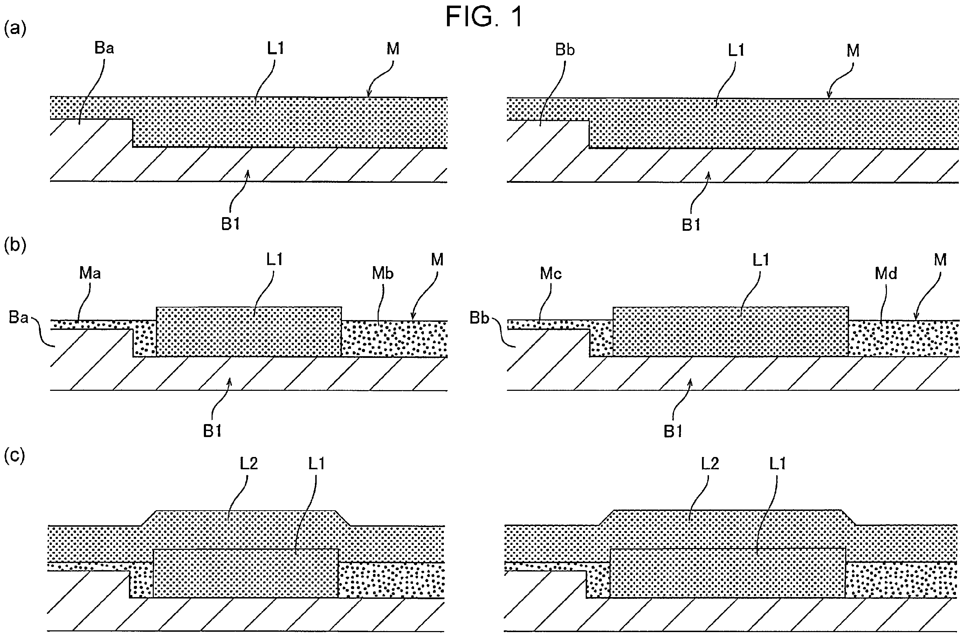

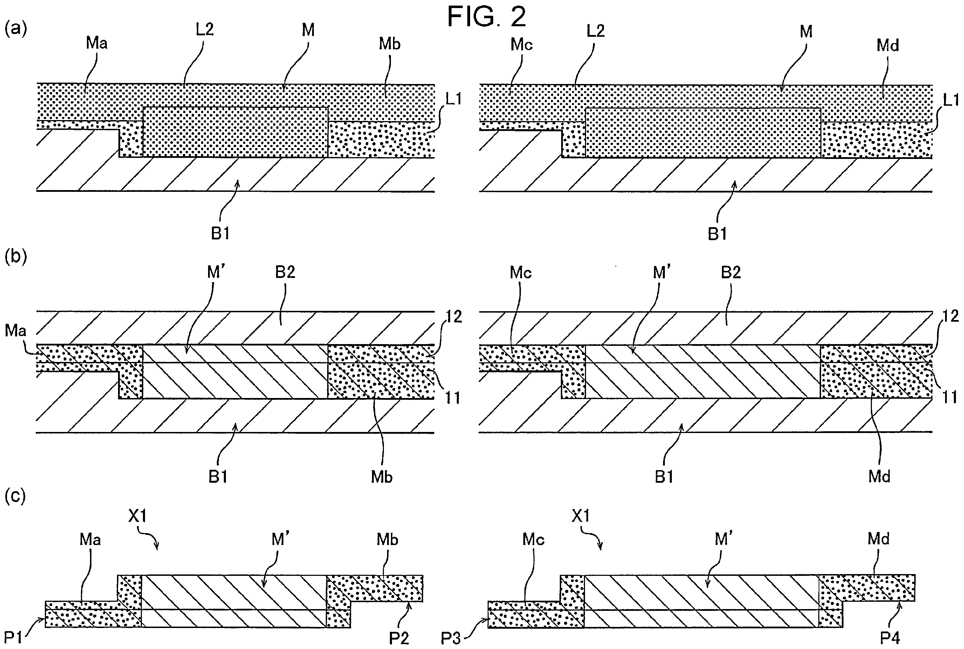

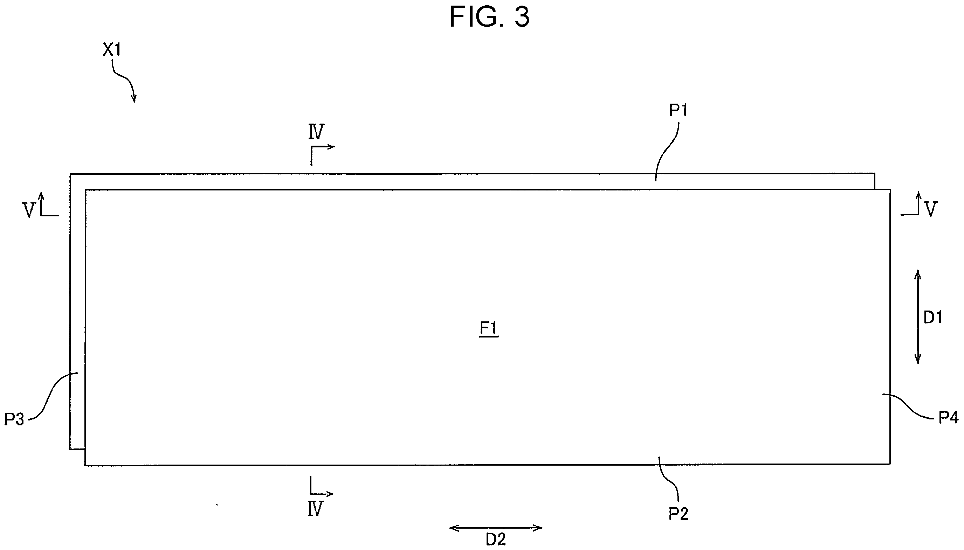

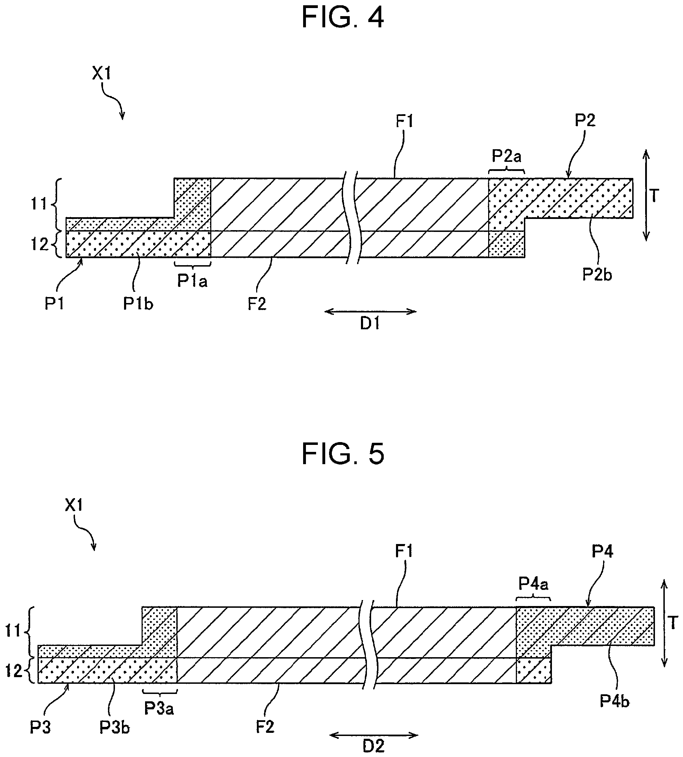

Fig. 1 and Fig. 2 illustrate an inorganic board manufacturing method according to a first embodiment of the present invention. Fig. 3 to Fig. 5 illustrate an inorganic board X1 as an example of an inorganic board manufactured by the present manufacturing method.

The inorganic board X1 has a front side F1 and a back side F2 opposite the front side F1. The inorganic board X1 has a first back-side joint part P1 at one end thereof and a first front-side joint part P2 at the other end thereof in a first direction D1 crossing a thickness direction T. The inorganic board X1 also has a second back-side joint part P3 at one end thereof and a second front-side joint part P4 at the other end thereof in a second direction D2 crossing the thickness direction T and the first direction D1. The first back-side joint part P1 and the first front-side joint part P2 extend in the second direction D2. The second back-side joint part P3 and the second front-side joint part P4 extend in the first direction D1.

The present manufacturing method is a method for manufacturing this inorganic board and includes a first depositing step, a pressing step, a second depositing step, a planarizing step, a curing step, and a processing step, such as those described below.

In the first depositing step, as illustrated in Fig. 1(a), a first layer L1 is formed by depositing a first raw material on a receiving plate B1. In Fig. 1(a), a series of diagrams on the left side is a schematic cross-sectional view of the inorganic board X1 in the first direction D1, and a series of diagrams on the right side is a schematic cross-sectional view of the inorganic board X1 in the second direction D2 (the same applies to the other diagrams of steps described below). The first layer L1 formed in the present step is, for example, 5 mm to 20 mm thick.

In the present embodiment, the receiving plate B1 is a template with an indented surface adjacent to a raw material mat (i.e., surface on which a raw material is to be deposited). Specifically, the receiving plate B1 has a first ridge Ba and a second ridge Bb. The first ridge Ba is disposed in an area corresponding to a predetermined area for forming the first back-side joint part P1, and the second ridge Bb is disposed in an area corresponding to a predetermined area for forming the second back-side joint part P3. The receiving plate B1 of the present embodiment defines the shape of the front side F1 of the inorganic board X1.

The first raw material used in the present step contains a first inorganic material with hydraulic properties, a first siliceous material, and a first reinforcing material in the present embodiment. The water content of the first raw material is, for example, 25% to 45% and preferably 30% to 40%.

Examples of the first inorganic material include cement, gypsum, and slag. Examples of the cement include ordinary portland cement, high-early-strength portland cement, alumina cement, blast-furnace slag cement, and fly ash cement. Examples of the gypsum include anhydrous gypsum, gypsum hemihydrate, and gypsum dihydrate. Examples of the slag include blast furnace slag and converter slag. One type of first inorganic material may be used, or two or more types first inorganic materials may be used. The Blaine specific surface area of the first inorganic material is, for example, 2000 cm²/g to 10000 cm²/g.

Examples of the first siliceous material include silica sand, silicate pigment, silica powder, coal ash, fly ash, and diatomaceous earth. One type of first siliceous material may be used, or two or more types of first siliceous materials may be used. The Blaine specific surface area of the first siliceous material is, for example, 3000 cm²/g to 30000 cm²/g. The mass ratio of the first inorganic material to the first siliceous material in the raw material mixture is preferably 6:4 to 3:7.

Examples of the first reinforcing material include organic reinforcing materials, such as plant-based reinforcing materials and synthetic fibers. Examples of the plant-based reinforcing materials include wood flour, wood wool, wood chip, woody pulp, wood fiber, wood fiber bundle, waste paper, bamboo fiber, hemp fiber, bagasse, chaff, and rice straw. Examples of the synthetic fibers include polyester fiber, polyamide fiber, polyethylene fiber, polypropylene fiber, and acrylic fiber. One type of first reinforcing material may be used, or two or more types of first reinforcing materials may be used. When wood flour is used as the first reinforcing material, the wood flour has a mesh size of, for example, 20 to 50. When wood chips are used as the first reinforcing material, the wood chips have a width of, for example, 0.5 mm to 2 mm, a length of, for example, 1 mm to 20 mm, and an aspect ratio (length/width) of, for example, 20 to 30. When wood fiber bundles are used as the first reinforcing material, the wood fiber bundles have a diameter of, for example, 0.1 mm to 2 mm and a length of, for example, 2 mm to 35 mm. The wood fiber bundles may have a branched shape, a curved shape, or a bent shape.

The first raw material may contain hollow bodies, such as expanded polystyrene beads, microspheres, pearlite, fly ash balloons, shirasu balloons, expanded shales, expanded clay, or burned diatomaceous earth. One type of hollow body may be used, or two or more types of hollow bodies may be used. The hollow bodies preferably have a median size (diameter: D50) of 0.05 mm to 2 mm.

The first raw material may contain other materials, as well as the constituent materials described above. Examples of the other materials include admixtures. Examples of the admixtures include mica, paper sludge incineration ash, silica fume, wollastonite, calcium carbonate, magnesium hydroxide, aluminum hydroxide, vermiculite, sepiolite, tobermorite, xonotlite, kaolinite, zeolite, and pulverized products of inorganic boards. It is preferable that mica be in the form of flakes with an average particle size of 200 µm to 700 µm and an aspect ratio of 60 to 100. Examples of the pulverized products of inorganic boards include pulverized products of defective uncured inorganic boards and pulverized products of defective cured inorganic boards produced in the process of making inorganic boards, and pulverized products of cut pieces and wastes of inorganic boards produced, for example, at building sites. The pulverized products have an average particle size of, for example, 50 µm to 150 µm.

In the pressing step, as illustrated in Fig. 1(b), a first portion Ma, a second portion Mb, a third portion Mc, and a fourth portion Md of the raw material mat M including the first layer L1 are compressed by being pressed toward the receiving plate B1 from a side opposite the receiving plate B1. The first portion Ma is disposed at one end in the first direction D1. The second portion Mb is disposed at the other end in the first direction D1. The third portion Mc is disposed at one end in the second direction D2. The fourth portion Md is disposed at the other end in the second direction D2.

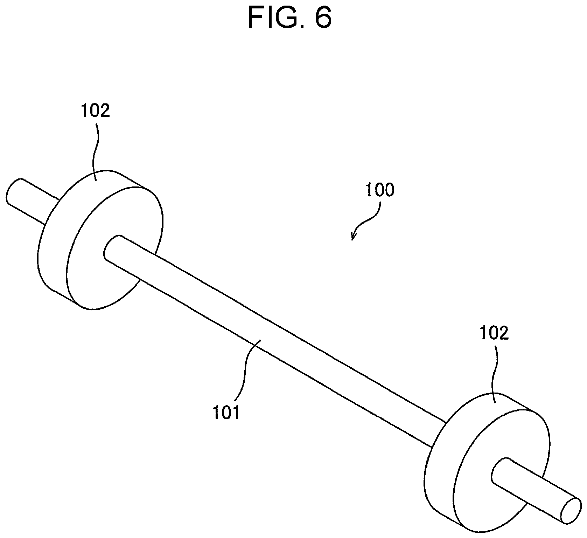

A device (not shown) including a roller 100, such as that illustrated in Fig. 6, can be used as a pressing means. The roller 100 includes a shaft 101 and two rolling parts 102. The shaft 101 is displaceably and rotatably supported in the device. The rolling parts 102 are secured to the shaft 101. The separation distance between the two rolling parts 102 can be adjusted in accordance with the separation distance between areas to be simultaneously pressed.

In the pressing step, for example, the raw material mat M is conveyed in the second direction D2 while the first portion Ma and the second portion Mb of the raw material mat M are pressed by bringing the two rolling parts 102 of the roller 100 into contact therewith. Then, for example, the raw material mat M is conveyed in the first direction D1 while the third portion Mc and the fourth portion Md of the raw material mat M are pressed by bringing the two rolling parts 102 of the roller 100 into contact therewith. The pressure applied for the pressing is, for example, 1 kg/cm² to 10 kg/cm². The first portion Ma, the second portion Mb, the third portion Mc, and the fourth portion Md of the raw material mat M are made thinner by the present step.

In the second depositing step, as illustrated in Fig. 1(c), a second layer L2 is formed by depositing a second raw material on the first layer L1. The second raw material is deposited over the entire first layer L1. The second layer L2 is, for example, 10 mm to 30 mm thick. The second raw material contains a second inorganic material with hydraulic properties, a second siliceous material, and a second reinforcing material in the present embodiment. The water content of the second raw material is, for example, 25% to 45% and preferably 30% to 40%.

Examples of the second inorganic material include the materials described above for the first inorganic material. Examples of the second reinforcing material include the materials described above for the first reinforcing material. The composition of the second raw material used in the present step may either be the same as, or different from, the composition of the first raw material used in the first depositing step.

In the planarizing step, as illustrated in Fig. 2(a), the exposed surface of the second layer L2 (i.e., surface opposite the receiving plate B1) is planarized. Examples of the planarizing technique include sweeping the exposed surface of the second layer L2 with a brush being placed in contact with the exposed surface of the second layer L2, and also include spraying air on the exposed surface of the second layer L2. The present step thus produces the raw material mat M where the amount of deposited raw material per unit thickness is locally larger at the first portion Ma, the second portion Mb, the third portion Mc, and the fourth portion Md.

In the curing step, as illustrated in Fig. 2(b), after a pressing plate B2 is placed on the raw material mat M including the first layer L1 and the second layer L2, the raw material mat M is cured while being pressed between the receiving plate B1 and the pressing plate B2 to form a cured plate M' from the raw material mat M. The pressing plate B2 of the present embodiment defines the shape of the back side F2 of the inorganic board X1.

In the present step, the pressure applied for the pressing is, for example, 20 kg/cm² to 70 kg/cm², the temperature is, for example, 50°C to 80°C, and the curing time is, for example, 6 hours to 12 hours. The curing described above may be followed by another curing step. When so-called autoclave curing is performed as another curing step, the temperature for the curing is, for example, 150°C or higher, the pressure is, for example, 0.5 MPa or more, and the curing time is, for example, 3 hours to 15 hours.

The curing step thus produces the cured plate M' locally densified at the first portion Ma, the second portion Mb, the third portion Mc, and the fourth portion Md by locally densely compressing the raw material at these portions. The cured plate M' has a multilayer structure including a first cured layer 11 and a second cured layer 12. The first cured layer 11 is a layer formed by curing of the first layer L1. The second cured layer 12 is a layer formed by curing of the second layer L2.

In the processing step, as illustrated in Fig. 2(c), the first portion Ma is processed into the first back-side joint part P1, the second portion Mb is processed into the first front-side joint part P2, the third portion Mc is processed into the second back-side joint part P3, and the fourth portion Md is processed into the second front-side joint part P4 (note that the cured plate M' in Fig. 2(b) is shown upside down in Fig. 2(c)). The processing described above is done, for example, by cutting work.

Fig. 3 to Fig. 5 illustrate the inorganic board X1 which is an example of the inorganic board manufactured by the series of steps described above. The inorganic board X1 has a multilayer structure including the first cured layer 11 and the second cured layer 12.

As described above, the inorganic board X1 has the front side F1 and the back side F2 opposite the front side F1. The inorganic board X1 has the first back-side joint part P1 at one end thereof and the first front-side joint part P2 at the other end thereof in the first direction D1, and also has the second back-side joint part P3 at one end thereof and the second front-side joint part P4 at the other end thereof in the second direction D2. The inorganic board X1 has a dimension of, for example, 200 mm to 1000 mm in the first direction D1, and has a dimension of, for example, 900 mm to 3200 mm in the second direction D2.

The first back-side joint part P1 is an end portion having a shape that is suited for joining to another inorganic board. In the present embodiment, the first back-side joint part P1 is an end portion having a lower tongue structure. The first back-side joint part P1 has a multilayer structure including the first cured layer 11 and the second cured layer 12. The first back-side joint part P1 has a first base portion P1a and a first extending portion P1b. The first base portion P1a is, for example, at least as thick as an inner portion (first inner portion) adjacent to the first back-side joint part P1 in the first direction D1. The first extending portion P1b is thinner than the first base portion P1a and extends outward from the first base portion P1a in the first direction D1.

The first back-side joint part P1 (having the first base portion P1a and the first extending portion P1b) is denser than the inner portion (first inner portion) adjacent to the first back-side joint part P1 in the first direction D1. The first back-side joint part P1 (having the first base portion P1a and the first extending portion P1b) has a relative density of, for example, 1.05 g/cm³ to 1.15 g/cm³, and the inner portion adjacent to the first back-side joint part P1a has a relative density of, for example, 0.9 g/cm³ to 1.1 g/cm³.

The first front-side joint part P2 is an end portion having a shape that is suited for joining to another inorganic board. In the present embodiment, the first front-side joint part P2 is an end portion having an upper tongue structure. The first front-side joint part P2 has a multilayer structure including the first cured layer 11 and the second cured layer 12. The first front-side joint part P2 has a second base portion P2a and a second extending portion P2b. The second base portion P2a is, for example, at least as thick as an inner portion (second inner portion) adjacent to the first front-side joint part P2 in the first direction D1. The second extending portion P2b is thinner than the second base portion P2a and extends outward from the second base portion P2a in the first direction D1. The second extending portion P2b is disposed on the side of the first extending portion P1b adjacent to the front side F1 in the thickness direction T. In other words, the first extending portion P1b is disposed on the side of the second extending portion P2b adjacent to the back side F2 in the thickness direction T.

The first front-side joint part P2 (having the second base portion P2a and the second extending portion P2b) is denser than the inner portion (second inner portion) adjacent to the first front-side joint part P2 in the first direction D1. The first front-side joint part P2 (having the second base portion P2a and the second extending portion P2b) has a relative density of, for example, 1.05 g/cm³ to 1.15 g/cm³, and the inner portion adjacent to the second back-side joint part P2 has a relative density of, for example, 0.9 g/cm³ to 1.1 g/cm³.

The second back-side joint part P3 is an end portion having a shape that is suited for joining to another inorganic board. In the present embodiment, the second back-side joint part P3 is an end portion having a lower tongue structure. The second back-side joint part P3 has a multilayer structure including the first cured layer 11 and the second cured layer 12. The second back-side joint part P3 has a third base portion P3a and a third extending portion P3b. The third base portion P3a is, for example, at least as thick as an inner portion (third inner portion) adjacent to the second back-side joint part P3 in the second direction D2. The third extending portion P3b is thinner than the third base portion P3a and extends outward from the third base portion P3a in the second direction D2.

The second back-side joint part P3 (having the third base portion P3a and the third extending portion P3b) is denser than the inner portion (third inner portion) adjacent to the second back-side joint part P3 in the second direction D2. The second back-side joint part P3 (having the third base portion P3a and the third extending portion P3b) has a relative density of, for example, 1.05 g/cm³ to 1.15 g/cm³, and the inner portion adjacent to the second back-side joint part P3 has a relative density of, for example, 0.9 g/cm³ to 1.1 g/cm³.

The second front-side joint part P4 is an end portion having a shape that is suited for joining to another inorganic board. In the present embodiment, the second front-side joint part P4 is an end portion having an upper tongue structure. The second front-side joint part P4 has a multilayer structure including the first cured layer 11 and the second cured layer 12. The second front-side joint part P4 has a fourth base portion P4a and a fourth extending portion P4b. The fourth base portion P4a is, for example, at least as thick as an inner portion (fourth inner portion) adjacent to the second front-side joint part P4 in the second direction D2. The fourth extending portion P4b is thinner than the fourth base portion P4a and extends outward from the fourth base portion P4a in the second direction D2. The fourth extending portion P4b is disposed on the side of the third extending portion P3b adjacent to the front side F1 in the thickness direction T. In other words, the third extending portion P3b is disposed on the side of the fourth extending portion P4b adjacent to the back side F2 in the thickness direction T.

The second front-side joint part P4 (including the fourth base portion P4a and the fourth extending portion P4b) is denser than the inner portion (fourth inner portion) adjacent to the second front-side joint part P4 in the second direction D2. The second front-side joint part P4 (including the fourth base portion P4a and the fourth extending portion P4b) has a relative density of, for example, 1.05 g/cm³ to 1.15 g/cm³, and the inner portion adjacent to the second front-side joint part P4 has a relative density of, for example, 0.9 g/cm³ to 1.1 g/cm³.

For construction of a wall using the inorganic board X1, a plurality of inorganic boards X1 are joined together in up-down (vertical) and right-left (horizontal) directions. Specifically, the plurality of inorganic boards X1 are arranged, for example, with the end portions (the first back-side joint part P1 and the first front-side joint part P2) extending in the second direction D2 joined together in the up-down direction, and the plurality of building boards X1 are arranged, for example, with the end portions (the second back-side joint part P3 and the second front-side joint part P4) extending in the first direction D1 joined together in the right-left direction (the same applies to a technique of construction with inorganic boards in embodiments described below).

In the inorganic board manufacturing method according to the present invention, the first depositing step, the pressing step, the second depositing step, and the planarizing step (Fig. 2(a)) can produce the raw material mat M where, as described above, the amount of deposited raw material per unit thickness is locally larger at the first portion Ma, the second portion Mb, the third portion Mc, and the fourth portion Md.

Then, the curing step (Fig. 2(b)) that follows can produce the cured plate M' locally densified at the first portion Ma, the second portion Mb, the third portion Mc, and the fourth portion Md, as described above, by locally densely compressing the raw material at these portions.

The processing step (Fig. 2(c)) that follows can thus produce the inorganic board X1 having the first back-side joint part P1, the first front-side joint part P2, the second back-side joint part P3, and the second front-side joint part P4 that are local high-density parts.

The inorganic board manufacturing method according to the present invention can produce, as described above, the inorganic board X1 which is locally denser in the first back-side joint part P1, the first front-side joint part P2, the second back-side joint part P3, and the second front-side joint part P4 (where the base portions P1a, P2a, P3a, and P4a of the joint parts P1 to P4 are each at least as thick as the corresponding inner portion). The inorganic board X1 is not excessively heavy and is, at the same time, suited to preventing entry of water through the inorganic board edges processed for forming the first back-side joint part P1, the first front-side joint part P2, the second back-side joint part P3, and the second front-side joint part P4. That is, the manufacturing method of the present invention is suited to achieving high waterproofness in the inorganic board X1 to be manufactured.

In the present manufacturing method, as described above, a template having ridges (raised portions) in areas corresponding to predetermined areas for forming the back-side joint parts (the first back-side joint part P1 and the second back-side joint part P3) in the raw material mat is used as the receiving plate B1. This reduces processing work for making the back-side joint parts in the processing step (Fig. 2(c)).

As necessary, the present manufacturing method may produce the second back-side joint part P3 and the second front-side joint part P4 that are not densified. By using a receiving plate without the second ridge Bb as the receiving plate B1, it is possible to produce the inorganic board X1 having the second back-side joint part P3 and the second front-side joint part P4 that are not densified.

In the present manufacturing method, the receiving plate B1 used may be one that does not have the first ridge Ba and the second ridge Bb, and the pressing plate B2 used may be one that has the first ridge Ba disposed in an area corresponding to a predetermined area for forming the first back-side joint part P1 and the second ridge Bb disposed in an area corresponding to a predetermined area for forming the second back-side joint part P3.

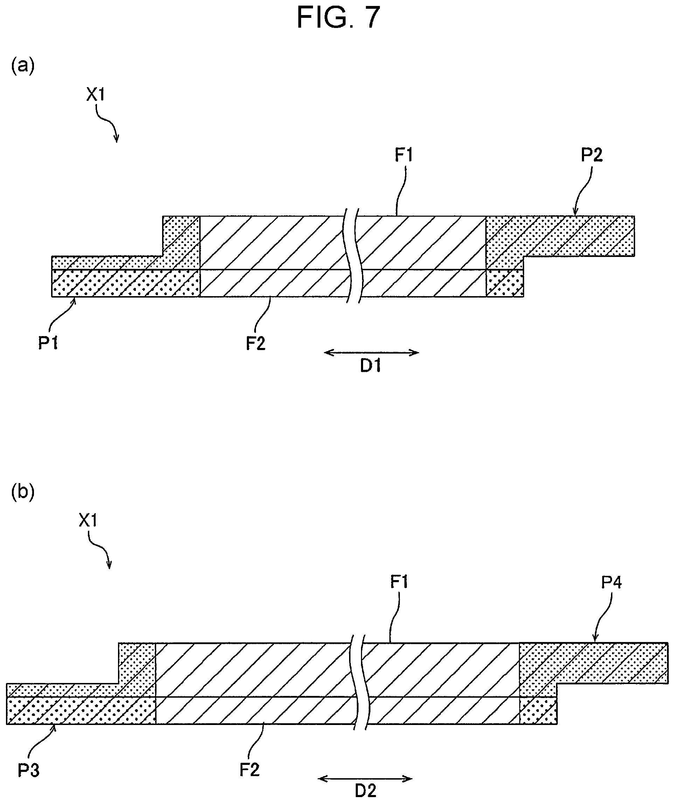

The inorganic board X1 manufactured by such a modified method is illustrated in Fig. 7. Fig. 7(a) is a partially omitted cross-sectional view of the inorganic board X1 (i.e., cross-sectional view in the first direction D1) manufactured by the modified method. Fig. 7(b) is another partially omitted cross-sectional view of the inorganic board X1 (i.e., cross-sectional view in the second direction D2) manufactured by the modified method. Like the inorganic board X1 illustrated in Fig. 3 to Fig. 5, the inorganic board X1 illustrated in Fig. 7 has, at end portions thereof, the first back-side joint part P1, the first front-side joint part P2, the second back-side joint part P3, and the second front-side joint part P4 that are local high-density parts, and thus is suited to achieving high waterproofness.

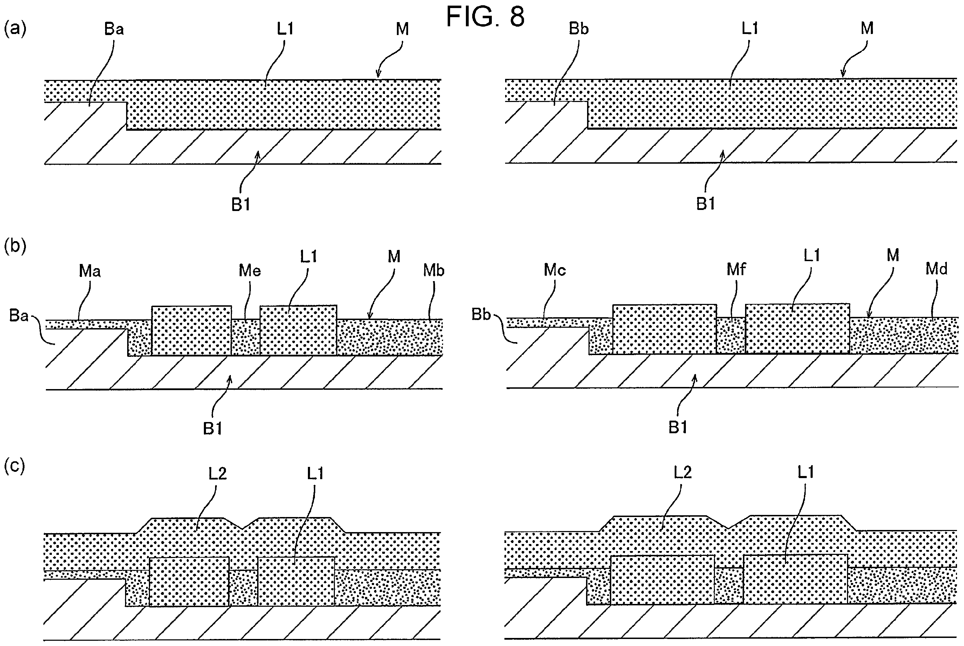

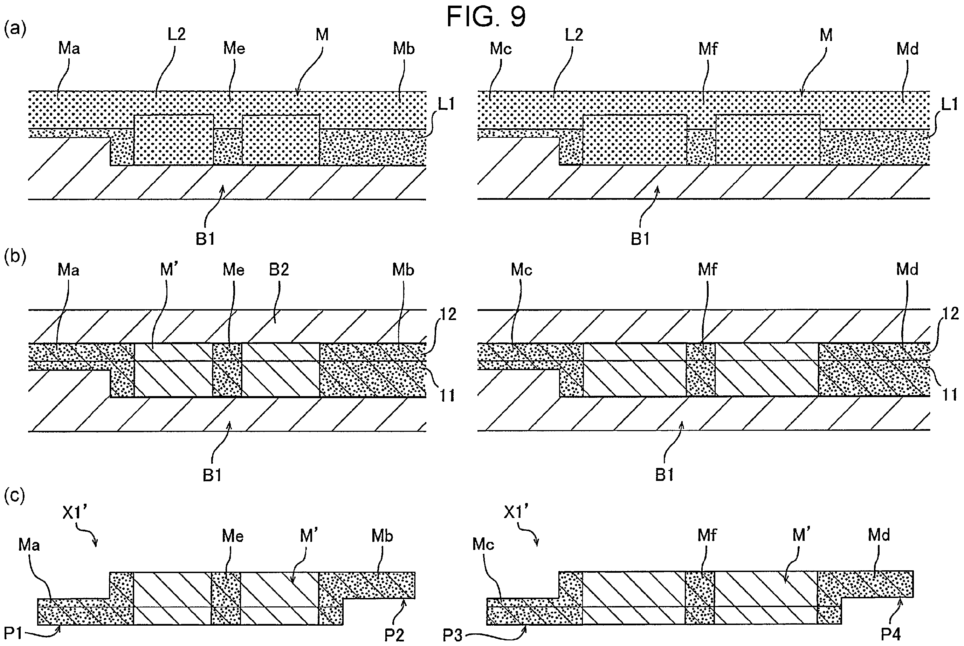

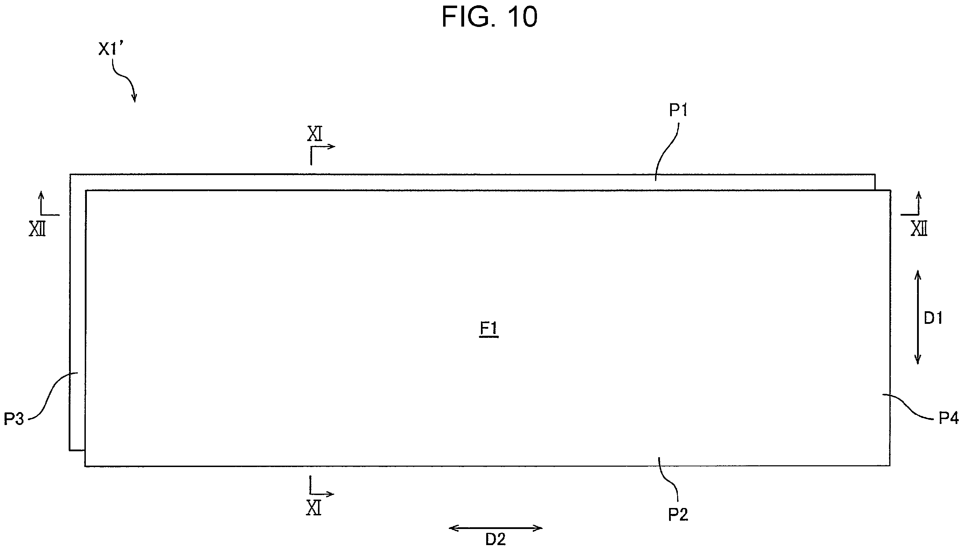

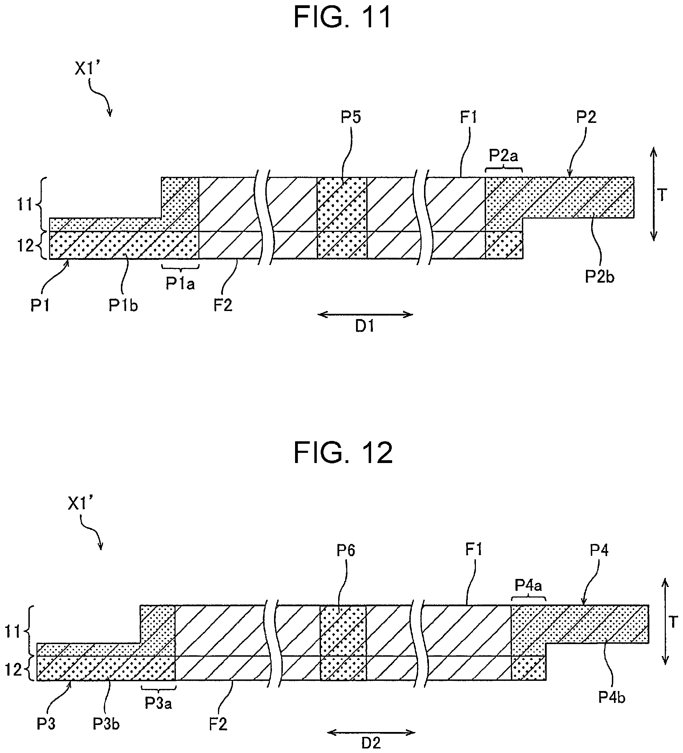

Fig. 8 and Fig. 9 illustrate an inorganic board manufacturing method according to a second embodiment of the present invention. Fig. 10 to Fig. 12 illustrate an inorganic board X1' which is an example of an inorganic board manufactured by the present manufacturing method.

The inorganic board X1' has the same configuration as the inorganic board X1 described above, except that it further has a first reinforcing part P5 and a second reinforcing part P6.

The first reinforcing part P5 is part of a region lying between the first back-side joint part P1 and the first front-side joint part P2 in the first direction D1 and is configured to extend in the second direction D2. Preferably, the first reinforcing part P5 is disposed in and around the center of the inorganic board X1' in the first direction D1. The first reinforcing part P5 has a multilayer structure including the first cured layer 11 and the second cured layer 12. The first reinforcing part P5 is denser than portions adjacent to the first reinforcing part P5 in the first direction D1. The first reinforcing part P5 has a relative density of, for example, 1.05 g/cm³ to 1.15 g/cm³, and the portions adjacent to the first reinforcing part P5 have a relative density of, for example, 0.9 g/cm³ to 1.1 g/cm³.

The second reinforcing part P6 is part of a region lying between the second back-side joint part P3 and the second front-side joint part P4 in the second direction D2 and is configured to extend in the first direction D1. Preferably, the second reinforcing part P6 is disposed in and around the center of the inorganic board X1' in the second direction D2. The second reinforcing part P6 has a multilayer structure including the first cured layer 11 and the second cured layer 12. The second reinforcing part P6 is denser than portions adjacent to the second reinforcing part P6 in the second direction D2. The second reinforcing part P6 has a relative density of, for example, 1.05 g/cm³ to 1.15 g/cm³, and the portions adjacent to the second reinforcing part P6 have a relative density of, for example, 0.9 g/cm³ to 1.1 g/cm³.

The other configuration of the inorganic board X1' is the same as that of the inorganic board X1 described above.

The present manufacturing method is a method for manufacturing this inorganic board and includes a first depositing step, a pressing step, a second depositing step, a planarizing step, a curing step, and a processing step, such as those described below.

In the first depositing step, as illustrated in Fig. 8(a), a first layer L1 is formed by depositing a first raw material on the receiving plate B1. The details are the same as those of the first depositing step described with reference to Fig. 1(a).

In the pressing step, as illustrated in Fig. 8(b), the first portion Ma, the second portion Mb, the third portion Mc, the fourth portion Md, a fifth portion Me, and a sixth portion Mf of the raw material mat M including the first layer L1 are compressed by being pressed toward the receiving plate B1 from a side opposite the receiving plate B1. The fifth portion Me is part of a region lying between the first portion Ma and the second portion Mb in the first direction D1, and is disposed in an area corresponding to a predetermined area for forming the first reinforcing part P5. Preferably, the fifth portion Me is disposed in and around the center of the inorganic board X1' to be manufactured, in the first direction D1. The fifth portion Me extends in the second direction D2. The sixth portion Mf is part of a region lying between the third portion Mc and the fourth portion Md in the second direction D2, and is disposed in an area corresponding to a predetermined area for forming the second reinforcing part P6. Preferably, the sixth portion Mf is disposed in and around the center of the inorganic board X1' to be manufactured, in the second direction D2. The sixth portion Mf extends in the first direction D1. The first to fourth portions Ma, Mb, Mc, and Md are the same as those described with reference to Fig. 1(b).

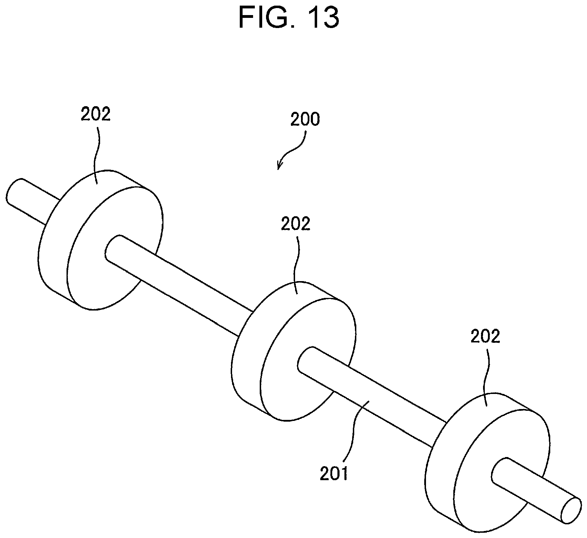

A device (not shown) including a roller 200, such as that illustrated in Fig. 13, can be used as a pressing means of the present embodiment. The roller 200 includes a shaft 201 and three rolling parts 202. The shaft 201 is displaceably and rotatably supported in the device. The rolling parts 202 are secured to the shaft 201. The separation distance between adjacent ones of the rolling parts 202 can be adjusted in accordance with the separation distance between areas to be simultaneously pressed.

In the pressing step, for example, the raw material mat M is conveyed in the second direction D2 while the first portion Ma, the second portion Mb, and the fifth portion Me of the raw material mat M are pressed by bringing the three rolling parts 202 of the roller 200 into contact therewith. Then, for example, the raw material mat M is conveyed in the first direction D1 while the third portion Mc, the fourth portion Md, and the sixth portion Mf of the raw material mat M are pressed by bringing the three rolling parts 202 of the roller 200 into contact therewith. The pressure applied for the pressing is, for example, 1 kg/cm² to 10 kg/cm². The first to sixth portions Ma, Mb, Me, Md, Me, and Mf of the raw material mat M are made thinner by the present step.

In the second depositing step, as illustrated in Fig. 8(c), the second layer L2 is formed by depositing a second raw material on the first layer L1. The second raw material is deposited over the entire first layer L1. The details are the same as those of the second depositing step described with reference to Fig. 1(c).

In the planarizing step, as illustrated in Fig. 9(a), the exposed surface of the second layer L2 (i.e., surface opposite the receiving plate B1) is planarized. The details are the same as those of the planarizing step described with reference to Fig. 2(a). The present step thus produces the raw material mat M where the amount of deposited raw material per unit thickness is locally larger at the first portion Ma, the second portion Mb, the third portion Mc, the fourth portion Md, the fifth portion Me, and the sixth portion Mf.

In the curing step, as illustrated in Fig. 9(b), after the pressing plate B2 is placed on the raw material mat M including the first layer L1 and the second layer L2, the raw material mat M is cured while being pressed between the receiving plate B1 and the pressing plate B2 to form the cured plate M' from the raw material mat M. The pressing plate B2 of the present embodiment defines the shape of the back side F2 of the inorganic board X1'. The curing conditions for the present step are, for example, the same as the curing conditions for the curing step described with reference to Fig. 2(b).

The curing step thus produces the cured plate M' locally densified at the first portion Ma, the second portion Mb, the third portion Mc, the fourth portion Md, the fifth portion Me, and the sixth portion Mf by locally densely compressing the raw material at these portions.

In the processing step, as illustrated in Fig. 9(c), the first portion Ma is processed into the first back-side joint part P1, the second portion Mb is processed into the first front-side joint part P2, the third portion Mc is processed into the second back-side joint part P3, and the fourth portion Md is processed into the second front-side joint part P4 (note that the cured plate M' in Fig. 9(b) is shown upside down in Fig. 9(c)). The processing described above is done, for example, by cutting work.

As in the case of the inorganic board manufacturing method according to the first embodiment, the inorganic board X1' manufactured by the inorganic board manufacturing method according to the second embodiment has, at end portions thereof, the first back-side joint part P1, the first front-side joint part P2, the second back-side joint part P3, and the second front-side joint part P4 that are local high-density parts.

The inorganic board X1' described above is not excessively heavy and is, at the same time, suited to preventing entry of water through the inorganic board edges processed for forming the first back-side joint part P1, the first front-side joint part P2, the second back-side joint part P3, and the second front-side joint part P4. That is, as in the case of the inorganic board manufacturing method according to the first embodiment, the inorganic board manufacturing method according to the second embodiment is suited to manufacturing an inorganic board having high waterproofness.

Additionally, the inorganic board manufacturing method according to the second embodiment can produce, as a raw material mat to be subjected to the curing step (Fig. 9(b)), a raw material mat where the amount of deposited raw material per unit thickness is locally larger also at the fifth portion Me and the sixth portion Mf. The inorganic board X1' having the first reinforcing part P5 (cured fifth portion Me) and the second reinforcing part P6 (cured sixth portion Mf) denser than the portions adjacent thereto can thus be produced.

The first reinforcing part P5 and the second reinforcing part P6 are suited to serving the function of reinforcing the inorganic board X1'. Specifically, the first reinforcing part P5 and the second reinforcing part P6 are suited to reducing warpage of the inorganic board X1' during construction or transport of the inorganic board X1' and therefore suited to reducing the occurrence of microcracks inside the inorganic board X1' caused by the warpage. Reducing the occurrence of microcracks is desirable in achieving high waterproofness of the inorganic board X1'.

In the present manufacturing method, the receiving plate B1 used may be one that does not have the first ridge Ba and the second ridge Bb, and the pressing plate B2 used may be one that has the first ridge Ba disposed in an area corresponding to a predetermined area for forming the first back-side joint part P1 and the second ridge Bb disposed in an area corresponding to a predetermined area for forming the second back-side joint part P3.

The embodiment described above can also produce the inorganic board X1' having the first back-side joint part P1, the first front-side joint part P2, the second back-side joint part P3, the second front-side joint part P4, the first reinforcing part P5, and the second reinforcing part P6.

As necessary, the present manufacturing method may produce the second back-side joint part P3 and the second front-side joint part P4 that are not densified. When the receiving plate B1 used is one that does not have the second ridge Bb, it is possible to produce the inorganic board X1' having the second back-side joint part P3 and the second front-side joint part P4 that are not densified.

As necessary, the present manufacturing method may produce the inorganic board X1' without the first reinforcing part P5. In this case, the inorganic board X1' can be produced by not pressing the fifth portion Me of the raw material mat M in the pressing step illustrated in Fig. 8 (b) .

As necessary, the present manufacturing method may produce the inorganic board X1' without the second reinforcing part P6. In this case, the inorganic board X1' can be produced by not pressing the sixth portion Mf of the raw material mat M in the pressing step illustrated in Fig. 8(b).

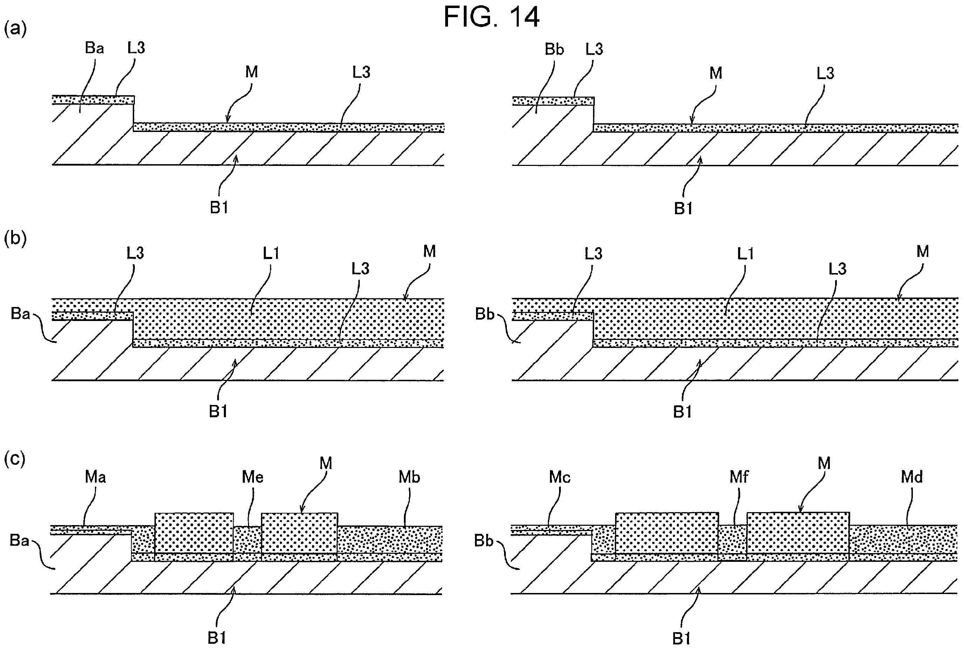

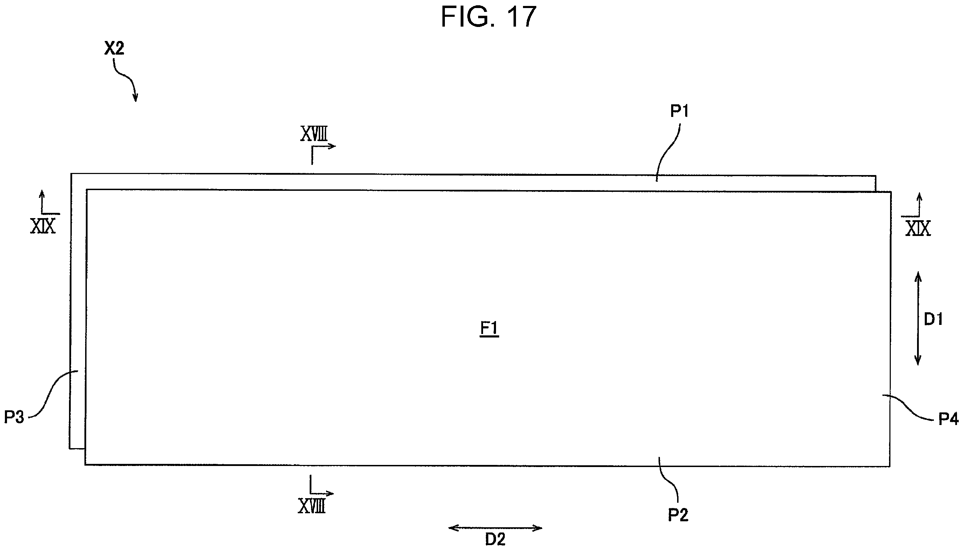

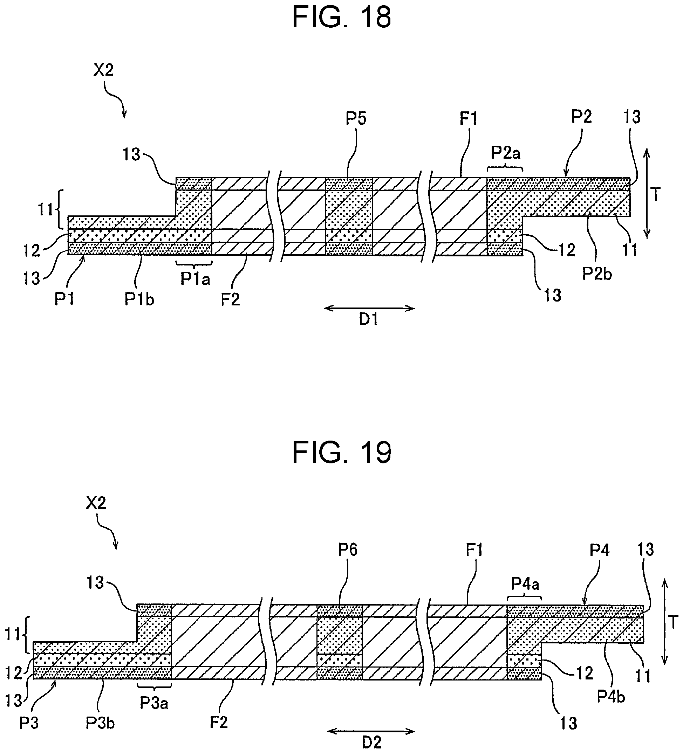

Fig. 14 to Fig. 16 illustrate an inorganic board manufacturing method according to a third embodiment of the present invention. Fig. 17 to Fig. 19 illustrate an inorganic board X2 which is an example of an inorganic board manufactured by the present manufacturing method.

The inorganic board X2 has the same configuration as the inorganic board X1 described above, except that it has a multilayer structure including a third cured layer 13 on the front side F1 and another third cured layer 13 on the back side F2.

The present manufacturing method is a method for manufacturing this inorganic board and includes a third depositing step, a first depositing step, a pressing step, a second depositing step, a planarizing step, an additional third depositing step, a curing step, and a processing step, such as those described below.

In the third depositing step, as illustrated in Fig. 14(a), a third layer L3 is formed by depositing a third raw material on the receiving plate B1. The third layer L3 is, for example, 5 mm to 15 mm thick. The third raw material contains a third inorganic material with hydraulic properties, a third siliceous material, and a third reinforcing material in the present embodiment. The water content of the third raw material is, for example, 20% to 40% and preferably 30% to 40%.

Examples of the third inorganic material include the materials described above for the first inorganic material. Examples of the third siliceous material include the materials described above for the first siliceous material. Examples of the third reinforcing material include the materials described above for the first reinforcing material.

The third reinforcing material is smaller than the first reinforcing material and the second reinforcing material. Specifically, when wood flour is used as the first to third reinforcing materials, the wood flour serving as the third reinforcing material has a mesh size of, for example, 15 to 40, which is smaller than the size of the wood flour serving as the first and second reinforcing materials. When wood chips are used as the first to third reinforcing materials, the wood chips serving as the third reinforcing material have a width of, for example, 0.4 mm to 1.8 mm and a length of, for example, 0.8 mm to 4 mm, which are smaller than the wood chips serving as the first and second reinforcing materials. When wood fiber bundles are used as the first to third reinforcing materials, the wood fiber bundles serving as the third reinforcing material have a diameter of, for example, 0.08 mm to 1.8 mm and a length of, for example, 1.8 mm to 30 mm, which are smaller than the wood fiber bundles serving as the first and second reinforcing materials.

In the first depositing step, as illustrated in Fig. 14(b), the first layer L1 is formed by depositing the first raw material on the third layer L3. The second raw material is deposited over the entire first layer L1. The first layer L1 is, for example, 10 mm to 30 mm thick in the present embodiment.

In the pressing step, as illustrated in Fig. 14(c), the first portion Ma, the second portion Mb, the third portion Mc, the fourth portion Md, the fifth portion Me, and the sixth portion Mf of the raw material mat M including the third layer L3 and the first layer L1 are compressed by being pressed toward the receiving plate B1 from a side opposite the receiving plate B1.

The first portion Ma is disposed at one end of the raw material mat M in the first direction D1, and the second portion Mb is disposed at the other end of the raw material mat M in the first direction D1. The first portion Ma and the second portion Mb extend in the second direction D2.

The third portion Mc is disposed at one end of the raw material mat M in the second direction D2, and the fourth portion Md is disposed at the other end of the raw material mat M in the second direction D2. The third portion Mc and the fourth portion Md extend in the first direction D1.

In the raw material mat M, the fifth portion Me is part of a region lying between the first portion Ma and the second portion Mb in the first direction D1. The fifth portion Me extends in the second direction D2. The sixth portion Mf is part of a region lying between the third portion Mc and the fourth portion Md in the second direction D2. The sixth portion Mf extends in the first direction D1.

A device (not shown) including the roller 200, such as that illustrated in Fig. 13, can be used as a pressing means of the present embodiment. The method and conditions of pressing are the same as the method and conditions of pressing using the roller 200, described above for the pressing step of the second embodiment.

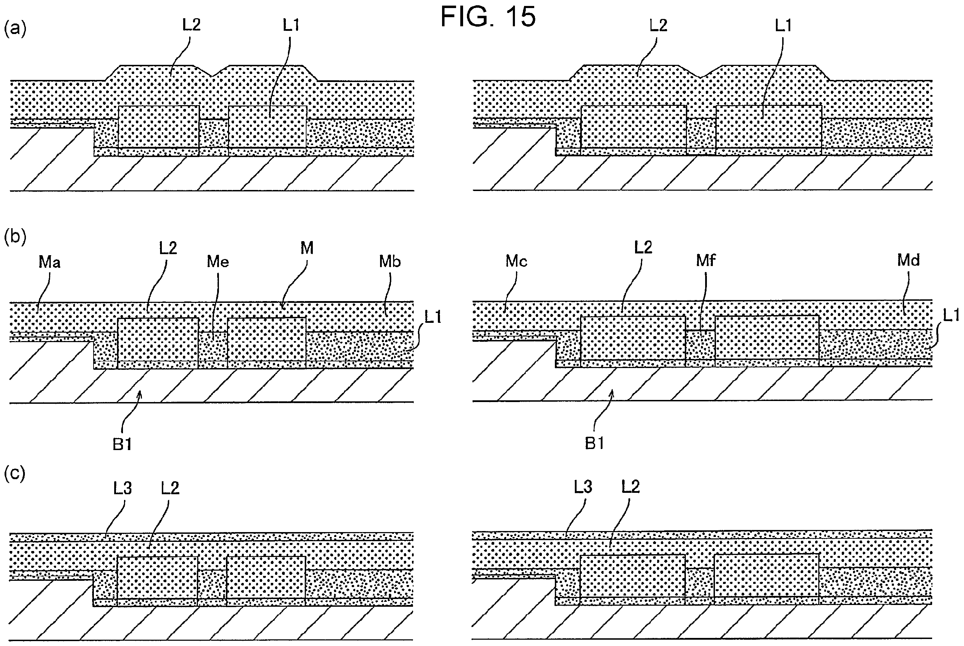

In the second depositing step, as illustrated in Fig. 15(a), the second layer L2 is formed by depositing the second raw material on the first layer L1. The second raw material is deposited over the entire first layer L1. The details are the same as those of the second depositing step described with reference to Fig. 1(c). The second layer L2 is, for example, 10 mm to 30 mm thick in the present embodiment.

In the planarizing step, as illustrated in Fig. 15(b), the exposed surface of the second layer L2 (i.e., surface opposite the receiving plate B1) is planarized. The details are the same as those of the planarizing step described with reference to Fig. 2(a). The present step thus produces the raw material mat M where the amount of deposited raw material per unit thickness is locally larger at the first portion Ma, the second portion Mb, the third portion Mc, the fourth portion Md, the fifth portion Me, and the sixth portion Mf.

In the additional third depositing step, as illustrated in Fig. 15(c), an additional third layer L3 is formed by depositing the third raw material on the second layer L2. The additional third layer L3 is, for example, 5 mm to 15 mm thick. The water content of the third raw material for forming the additional third layer L3 is, for example, 20% to 40% and preferably 30% to 40%.

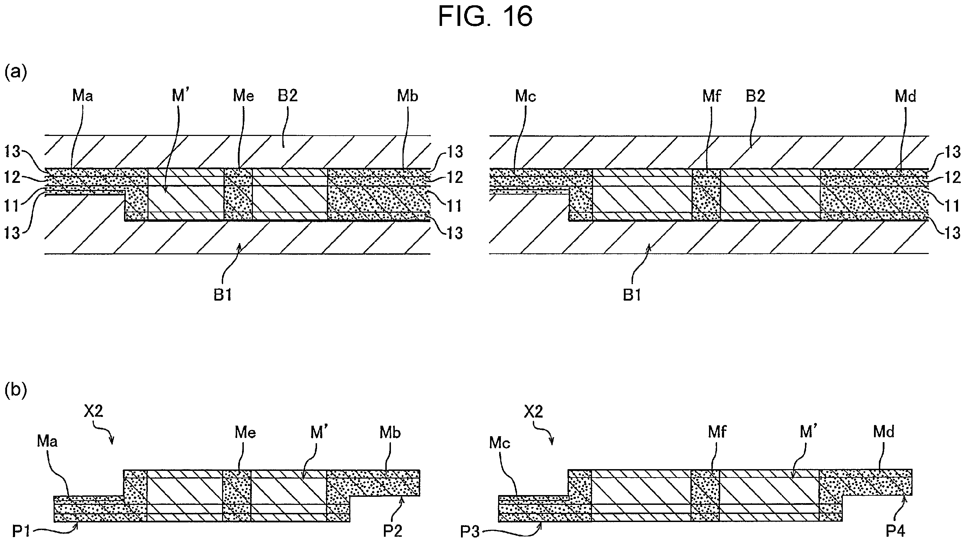

In the curing step, as illustrated in Fig. 16(a), after the pressing plate B2 is placed on the raw material mat M including the third layer L3, the first layer L1, the second layer L2, and the additional third layer, the raw material mat M is cured while being pressed between the receiving plate B1 and the pressing plate B2 to form the cured plate M' from the raw material mat M. The pressing plate B2 of the present embodiment defines the shape of the back side F2 of the inorganic board X1'. The curing conditions for the present step are, for example, the same as the curing conditions for the curing step described with reference to Fig. 2(b).

The curing step thus produces the cured plate M' locally densified at the first portion Ma, the second portion Mb, the third portion Mc, the fourth portion Md, the fifth portion Me, and the sixth portion Mf by locally densely compressing the raw material at these portions.

The cured plate M' has a multilayer structure that includes the third cured layer 13, the first cured layer 11, the second cured layer 12, and the additional third cured layer 13 in this order from the front side F1. The third cured layer 13 is a layer formed by curing of the third layer L3. The first cured layer 11 is a layer formed by curing of the first layer L1. The second cured layer 12 is a layer formed by curing of the second layer L2. The additional third cured layer 13 is a layer formed by curing of the additional third layer L3.

In the processing step, as illustrated in Fig. 16(b), the first portion Ma is processed into the first back-side joint part P1, the second portion Mb is processed into the first front-side joint part P2, the third portion Mc is processed into the second back-side joint part P3, and the fourth portion Md is processed into the second front-side joint part P4 (note that the cured plate M' in Fig. 16(a) is shown upside down in Fig. 16(b)). The processing described above is done, for example, by cutting work.

Fig. 17 to Fig. 19 illustrate the inorganic board X2 which is an example of the inorganic board manufactured by the series of steps described above. The inorganic board X2 has the front side F1 and the back side F2 opposite the front side F1. The inorganic board X2 has the first back-side joint part P1 at one end thereof and the first front-side joint part P2 at the other end thereof in the first direction D1, and also has the second back-side joint part P3 at one end thereof and the second front-side joint part P4 at the other end thereof in the second direction D2. As for the dimensions in the first direction D1 and the second direction D2, the inorganic board X2 is the same as the inorganic board X1.

The inorganic board X2 has a multilayer structure that includes the third cured layer 13, the first cured layer 11, the second cured layer 12, and the additional third cured layer 13 in this order from the front side F1. The third cured layer 13 is a layer formed by curing of the third layer L3. The first cured layer 11 is a layer formed by curing of the first layer L1. The second cured layer 12 is a layer formed by curing of the second layer L2. The additional third cured layer 13 is a layer formed by curing of the additional third layer L3.

The first back-side joint part P1 is an end portion having a shape that is suited for joining to another inorganic board. In the present embodiment, the first back-side joint part P1 is an end portion having a lower tongue structure. The first back-side joint part P1 has a multilayer structure including the third cured layer 13, the first cured layer 11, the second cured layer 12, and the additional third cured layer 13. The first back-side joint part P1 has the first base portion P1a and the first extending portion P1b. The first extending portion P1b is thinner than the first base portion P1a and extends outward from the first base portion P1a in the first direction D1.

The first back-side joint part P1 is denser than the inner portion adjacent to the first back-side joint part P1 in the first direction D1. The first back-side joint part P1 has a relative density of, for example, 1.05 g/cm³ to 1.15 g/cm³ and the inner portion adjacent to the first back-side joint part P1 has a relative density of, for example, 0.9 g/cm³ to 1.1 g/cm³.

The first front-side joint part P2 is an end portion having a shape that is suited for joining to another inorganic board. In the present embodiment, the first front-side joint part P2 is an end portion having an upper tongue structure. The first front-side joint part P2 has a multilayer structure that includes the third cured layer 13, the first cured layer 11, the second cured layer 12, and the additional third cured layer 13 in this order from the front side F1. The first front-side joint part P2 has the second base portion P2a and the second extending portion P2b. The second extending portion P2b is thinner than the second base portion P2a and extends outward from the second base portion P2a in the first direction D1. The second extending portion P2b is disposed on the side of the first extending portion P1b adjacent to the front side F1 in the thickness direction T. In other words, the first extending portion P1b is disposed on the side of the second extending portion P2b adjacent to the back side F2 in the thickness direction T.

The first front-side joint part P2 is denser than the inner portion adjacent to the first front-side joint part P2 in the first direction D1. The first front-side joint part P2 has a relative density of, for example, 1.05 g/cm³ to 1.15 g/cm³, and the inner portion adjacent to the second back-side joint part P2 has a relative density of, for example, 0.9 g/cm³ to 1.1 g/cm³.

The second back-side joint part P3 is an end portion having a shape that is suited for joining to another inorganic board. In the present embodiment, the second back-side joint part P3 is an end portion having a lower tongue structure. The second back-side joint part P3 has a multilayer structure that includes the third cured layer 13, the first cured layer 11, the second cured layer 12, and the additional third cured layer 13 in this order from the front side F1. The second back-side joint part P3 has the third base portion P3a and the third extending portion P3b. The third extending portion P3b is thinner than the third base portion P3a and extends outward from the third base portion P3a in the second direction D2.

The second back-side joint part P3 is denser than the inner portion adjacent to the second back-side joint part P3 in the second direction D2. The second back-side joint part P3 has a relative density of, for example, 1.05 g/cm³ to 1.15 g/cm³ and the inner portion adjacent to the second back-side joint part P3 has a relative density of, for example, 0.9 g/cm³ to 1.1 g/cm³.

The second front-side joint part P4 is an end portion having a shape that is suited for joining to another inorganic board. In the present embodiment, the second front-side joint part P4 is an end portion having an upper tongue structure. The second front-side joint part P4 has a multilayer structure that includes the third cured layer 13, the first cured layer 11, the second cured layer 12, and the additional third cured layer 13 in this order from the front side F1. The second front-side joint part P4 has the fourth base portion P4a and the fourth extending portion P4b. The fourth extending portion P4b is thinner than the fourth base portion P4a and extends outward from the fourth base portion P4a in the second direction D2. The fourth extending portion P4b is disposed on the side of the third extending portion P3b adjacent to the front side F1 in the thickness direction T. In other words, the third extending portion P3b is disposed on the side of the fourth extending portion P4b adjacent to the back side F2 in the thickness direction T.

The second front-side joint part P4 is denser than the inner portion adjacent to the second front-side joint part P4 in the second direction D2. The second front-side joint part P4 has a relative density of, for example, 1.05 g/cm³ to 1.15 g/cm³, and the inner portion adjacent to the second front-side joint part P4 has a relative density of, for example, 0.9 g/cm³ to 1.1 g/cm³.

As in the case of the inorganic board manufacturing method according to the first embodiment, the inorganic board X2 manufactured by the inorganic board manufacturing method according to the third embodiment has, at end portions thereof, the first back-side joint part P1, the first front-side joint part P2, the second back-side joint part P3, and the second front-side joint part P4 that are local high-density parts.

The inorganic board X2 described above is not excessively heavy and is, at the same time, suited to preventing entry of water through the inorganic board edges processed for forming the first back-side joint part P1, the first front-side joint part P2, the second back-side joint part P3, and the second front-side joint part P4. That is, as in the case of the inorganic board manufacturing method according to the first embodiment, the inorganic board manufacturing method according to the third embodiment is suited to manufacturing an inorganic board having high waterproofness.

The inorganic board manufacturing method according to the third embodiment can produce, as a raw material mat M to be subjected to the curing step (Fig. 16(a)), a raw material mat where the amount of deposited raw material per unit thickness is locally larger also at the fifth portion Me and the sixth portion Mf. The inorganic board X2 having the first reinforcing part P5 (cured fifth portion Me) and the second reinforcing part P6 (cured sixth portion Mf) denser than the portions adjacent thereto can thus be produced.

The first reinforcing part P5 and the second reinforcing part P6 are suited to serving the function of reinforcing the inorganic board X2. Specifically, the first reinforcing part P5 and the second reinforcing part P6 are suited to reducing warpage of the inorganic board X2 during construction or transport of the inorganic board X2 and therefore suited to reducing the occurrence of microcracks inside the inorganic board X2 caused by the warpage. Reducing the occurrence of microcracks is desirable in achieving high waterproofness of the inorganic board X2.

In the inorganic board manufacturing method according to the third embodiment, the third cured layer 13 forming the front side F1 and the additional third cured layer 13 forming the back side F2 each serve as a surface layer. In the present embodiment, the third cured layers 13 are each formed of a third raw material containing the third reinforcing material smaller than the first reinforcing material and the second reinforcing material. The third cured layers 13 can each function as a surface layer denser than the first cured layer 11 formed of the first raw material and the second cured layer 12 formed of the second raw material. The third cured layers 13 thus help the inorganic board X2 achieve high waterproofness.

In the present manufacturing method, the receiving plate B1 used may be one that does not have the first ridge Ba and the second ridge Bb, and the pressing plate B2 used may be one that has the first ridge Ba disposed in an area corresponding to a predetermined area for forming the first back-side joint part P1 and the second ridge Bb disposed in an area corresponding to a predetermined area for forming the second back-side joint part P3.

The embodiment described above can thus produce the inorganic board X2 having the first back-side joint part P1, the first front-side joint part P2, the second back-side joint part P3, the second front-side joint part P4, the first reinforcing part P5, and the second reinforcing part P6.

As necessary, the present manufacturing method may produce the second back-side joint part P3 and the second front-side joint part P4 that are not densified. When the receiving plate B1 used is one that does not have the second ridge Bb, it is possible to produce the inorganic board X2 having the second back-side joint part P3 and the second front-side joint part P4 that are not densified.

As necessary, the present manufacturing method may produce the inorganic board X2 without the first reinforcing part P5. In this case, the inorganic board X2 can be produced by not pressing the fifth portion Me of the raw material mat M in the pressing step illustrated in Fig. 14 (c) .

As necessary, the present manufacturing method may produce the inorganic board X2 without the second reinforcing part P6. In this case, the inorganic board X2 can be produced by not pressing the fifth portion Me of the raw material mat M in the pressing step illustrated in Fig. 14 (c) .

The present manufacturing method described above may omit the third depositing step described with reference to Fig. 14(a). In this case, the inorganic board X2 without the third cured layer 13 on the front side F1 is produced. The present manufacturing method described above may omit the additional third depositing step described with reference to Fig. 15(c). In this case, the inorganic board X2 without the third cured layer 13 on the back side F2 is produced.

### Reference Signs List

D1: first direction
D2: second direction
T: thickness direction
B1: receiving plate
Ba: first ridge
Bb: second ridge
B2: pressing plate
M: raw material mat
Ma: first portion
Mb: second portion
Me: third portion
Md: fourth portion
Me: fifth portion
Mf: sixth portion
L1: first layer
L2: second layer
L3: third layer
X1, X1', X2: inorganic board
11: first cured layer
12: second cured layer
13: third cured layer
P1: first back-side joint part
P1a: first base portion
P1b: first extending portion
P2: first front-side joint part
P2a: second base portion
P2b: second extending portion
P3: second back-side joint part
P3a: third base portion
P3b: third extending portion
P4: second front-side joint part
P4a: fourth base portion
P4b: fourth extending portion
P5: first reinforcing part
P6: second reinforcing part

## Claims

1. An inorganic board manufacturing method comprising:
a first depositing step of depositing a first raw material containing a first inorganic material with hydraulic properties and a first reinforcing material on a receiving plate to form a first layer;
a pressing step of pressing a first portion and a second portion of a raw material mat including the first layer toward the receiving plate from a side opposite the receiving plate to compress the first portion and the second portion, the first portion and the second portion being one end portion and the other end portion, respectively, of the raw material mat in a first direction;
a second depositing step of depositing a second raw material containing a second inorganic material with hydraulic properties and a second reinforcing material on the first layer to form a second layer;
a planarizing step of planarizing an exposed surface of the second layer, the exposed surface being opposite the receiving plate;
a curing step of placing a pressing plate on the raw material mat including the first layer and the second layer, and curing the raw material mat pressed between the receiving plate and the pressing plate to form a cured plate from the raw material mat; and
a processing step of processing the first portion and the second portion into a first back-side joint part and a first front-side joint part, respectively.

2. The inorganic board manufacturing method according to Claim 1, wherein the pressing step presses a third portion and a fourth portion of the raw material mat toward the receiving plate from the side opposite the receiving plate to compress the third portion and the fourth portion, the third portion and the fourth portion being one end portion and the other end portion, respectively, of the raw material mat in a second direction crossing the first direction, and
the processing step processes the third portion and the fourth portion into a second back-side joint part and a second front-side joint part, respectively.

3. The inorganic board manufacturing method according to Claim 1, wherein the pressing step presses a fifth portion of the raw material mat toward the receiving plate from the side opposite the receiving plate to compress the fifth portion, the fifth portion being part of a region lying between the first portion and the second portion of the raw material mat in the first direction.

4. The inorganic board manufacturing method according to Claim 2, wherein the pressing step presses a sixth portion of the raw material mat toward the receiving plate from the side opposite the receiving plate to compress the sixth portion, the sixth portion being part of a region lying between the third portion and the fourth portion of the raw material mat in the second direction.

5. The inorganic board manufacturing method according to Claim 1, further comprising at least one third depositing step of depositing a third raw material containing a third inorganic material with hydraulic properties and a third reinforcing material to form a third layer,
wherein the third depositing step forms the third layer on the receiving plate before the first depositing step, and the first depositing step forms the first layer on the third layer,
the third depositing step forms the third layer on the second layer between the planarizing step and the curing step, or
the third depositing step forms the third layer on the receiving plate before the first depositing step, the first depositing step forms the first layer on the third layer, and the third depositing step forms the third layer on the second layer between the planarizing step and the curing step.

6. The inorganic board manufacturing method according to Claim 1, wherein the receiving plate and/or the pressing plate is a template having an indented surface adjacent to the raw material mat.

7. An inorganic board having a front side and a back side opposite the front side, the inorganic board having a thickness between the front side and the back side,
the inorganic board comprising a first back-side joint part at one end thereof and a first front-side joint part at the other end thereof in a first direction crossing the thickness direction,
wherein the first back-side joint part has a first base portion at least as thick as a first inner portion adjacent to the first back-side joint part in the first direction and a first extending portion thinner than the first base portion and extending outward from the first base portion in the first direction, and the first base portion and the first extending portion are denser than the first inner portion, and
the first front-side joint part has a second base portion at least as thick as a second inner portion adjacent to the first front-side joint part in the first direction and a second extending portion thinner than the second base portion and extending outward from the second base portion in the first direction, the second extending portion is disposed on a side of the first extending portion adjacent to the front side in the thickness direction, and the second base portion and the second extending portion are denser than the second inner portion.

8. The inorganic board according to Claim 7, wherein the first back-side joint part and the first front-side joint part have a multilayer structure including a first cured layer and a second cured layer in the thickness direction.

9. The inorganic board according to Claim 7, further comprising a first reinforcing part being part of a region lying between the first back-side joint part and the first front-side joint part in the first direction,
wherein the first reinforcing part is at least as thick as portions adjacent to the first reinforcing part in the first direction and is denser than the portions adjacent thereto.

10. The inorganic board according to Claim 7, comprising a second back-side joint part at one end thereof and a second front-side joint part at the other end thereof in a second direction crossing the thickness direction and the first direction,
wherein the second back-side joint part has a third base portion at least as thick as a third inner portion adjacent to the second back-side joint part in the second direction and a third extending portion thinner than the third base portion and extending outward from the third base portion in the second direction, and the third base portion and the third extending portion are denser than the third inner portion, and
the second front-side joint part has a fourth base portion at least as thick as a fourth inner portion adjacent to the second front-side joint part in the second direction and a fourth extending portion thinner than the fourth base portion and extending outward from the fourth base portion in the second direction, the fourth extending portion is disposed on a side of the third extending portion adjacent to the front side in the thickness direction, and the fourth base portion and the fourth extending portion are denser than the fourth inner portion.

11. The inorganic board according to Claim 10, wherein the second back-side joint part and the second front-side joint part have a multilayer structure including the first cured layer and the second cured layer in the thickness direction.

12. The inorganic board according to Claim 10, further comprising a second reinforcing part being part of a region lying between the second back-side joint part and the second front-side joint part in the second direction,
wherein the second reinforcing part is at least as thick as portions adjacent to the second reinforcing part in the second direction and is denser than the portions adjacent thereto.

13. The inorganic board according to Claim 7, wherein the inorganic board has a multilayer structure including the first cured layer, the second cured layer, and a third cured layer in order of description, a multilayer structure including a third cured layer, the first cured layer, and the second cured layer in order of description, or a multilayer structure including a third cured layer, the first cured layer, the second cured layer, and another third cured layer in order of description.
